# EUROPEAN PATENT APPLICATION

(11) **EP 2 136 427 A1**
(43) Date of publication of application: **23.12.2009**
(21) Application number: 09162443.7
(22) Date of filing: 10.06.2009
(51) Int. Cl.: H01M 8/02

(54) **Fuel Cell Interconnect Structures, And Related Devices And Processes**

(30) Priority: 20.06.2008 US 143188
(71) Applicant: General Electric Company, Schenectady, NY 12345 (US)
(72) Inventor: Alinger, Matthew Joseph, Albany, NY 12210 (US); Klug, Frederic Joseph, Schenectady, NY 12303 (US); Ruud, James Anthony, Delmar, NY 12054 (US); Renou, Stephane, Clifton Park, NY 12065 (US); SarrafiI-Nour, Reza, Clifton Park, NY 12065 (US)
(74) Representative: Bedford, Grant Richard

(57) **Abstract**

A method for the formation of a diffusion barrier layer (56) on a surface (52) of at least one fuel cell interconnect structure (50) is described. The interconnect structure (50) is usually formed from ferritic stainless steel, and includes chromium. The method includes the step of coating an austenite phase-stabilizer (54) on the interconnect surface (52), and then heating the coated surface. The heat treatment transforms the microstructure of the surface region of the interconnect, from a substantially ferritic body-centered cubic (BCC) phase to a substantially austenitic face-centered cubic (FCC) phase. The diffusion rate of chromium through the FCC phase is relatively low. Thus, the formation of a thick layer of chromium oxide can be minimized, leading to better fuel cell performance. Related fuel cells and fuel cell stacks are also disclosed.

## Description

The invention generally relates to fuel cells. More specifically, the invention is directed to interconnect structures and materials for solid oxide fuel cells.

Solid oxide fuel cells (SOFCs) are promising devices for producing electrical energy from fuel with high efficiency and low emissions. Like most fuel cells, the SOFC devices generate electric current by the electrochemical combination of hydrogen and oxygen. In a typical SOFC, an anodic layer and a cathodic layer are separated by an electrolyte formed of a ceramic solid oxide. Hydrogen, either pure or reformed from hydrocarbons, is flowed along the outer surface of the anode, and diffuses into the anode. Oxygen, typically from air, is flowed along the outer surface of the cathode and diffuses into the cathode. Each O₂ molecule is split and reduced to two O⁻² anions (catalytically) by the cathode. The oxygen anions transport through the electrolyte and combine at the anode/electrolyte interface with four hydrogen ions, to form two molecules of water. The anode and the cathode are connected externally through a load to complete the circuit, whereby four electrons are transferred from the anode to the cathode.

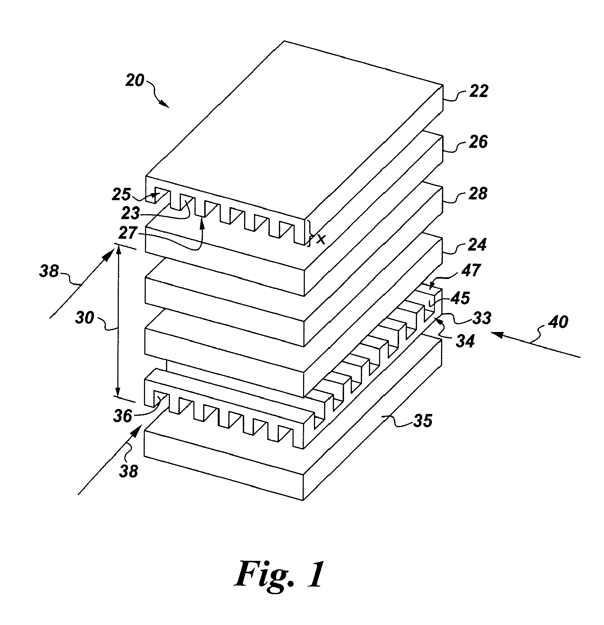

As shown in FIG. 1, an exemplary, planar SOFC 20 comprises a cathode interconnect 22, and a pair of electrodes - a cathode 26 and an anode 24. The cathode and the anode are separated by a ceramic electrolyte 28. In general, this cell arrangement is well-known in the art, although the configuration depicted in the figure may be modified, e.g., with the anode layer above the electrolyte, and the cathode layer below the electrolyte.

Commercial solid oxide fuel cell structures usually consist of many of these cells stacked together - sometimes hundreds of cells, which cumulatively provide enough voltage to make the device commercially feasible. The cells are typically joined together by interconnects, such as that noted above. The interconnects are usually in the form of metallic or ceramic layers, and provide electrical contact, current distribution, and structural integrity between individual cells. In a typical cathode-electrolyte-anode stack arrangement (viewed vertically for the sake of discussion), one interconnect layer is attached to an upper surface of a cathode layer, for connection to the anode layer of an adjacent cell or "module". Another interconnect layer is attached to the lower surface of the anode, for connection to the cathode layer of another adjacent cell.

Metallic interconnects are often used in fuel cells, based on considerations like cost and ease-of-fabrication. As in the case of any type of interconnect (e.g., ceramic), the metallic alloy composition must provide a desired level of hermeticity and electrical conductivity under fuel cell operating conditions. Moreover, the alloy material should be capable of withstanding the effects of operation at high temperatures and temperature cycling conditions.

In many cases, the cathode interconnect and the anode interconnect are formed from a ferritic stainless steel material. Ferritic stainless steels are well-known in the art, and are usually based on iron, chromium, and various other selected elements. Ferritic steels are useful for several reasons. As an example, the materials are in the form of the body-centered cubic (BCC) phase. Materials of this type have a coefficient of thermal expansion (CTE) which can be closely matched to the CTE of the electrolyte in the fuel cell. Matching of the expansion characteristics for various layers in an SOFC is critical, in terms of high-temperature electrical performance, and structural integrity.

Ferritic stainless steels are certainly very useful as interconnect materials. The chromium-containing alloys are easily formed and shaped, and are also less costly than most of the ceramic interconnect materials. However, the ferritic stainless steels have some drawbacks as well. For example, the materials are susceptible to thermally-induced oxide formation, i.e., the rapid formation of a chromium oxide (chromia) layer on the surface of the alloy component. In most cases, a thin, dense chromia layer on the surface of the component may be beneficial for protecting the metal surface, while also exhibiting relatively high electrical conductivity. However, a fast-growing, thick chromia layer can degrade the performance of the fuel cell, by increasing the overall electrical resistance of the cell in a short period of time. As a result, the useful life of the fuel cell can be decreased considerably.

With these considerations in mind, new processes for the fabrication of solid oxide fuel cells and fuel cell components would be welcome in the art. The processes should result in fuel cell structures which can provide optimum and stable electrochemical characteristics and fuel efficiency over an extended period of operation, e.g., as measured by the area specific resistance (ASR) of the fuel cell. Moreover, the fuel cell should exhibit good physical integrity and durability.

The present invention addresses these and other needs by, in one aspect, providing a method for the formation of a diffusion barrier layer on a surface of at least one fuel cell interconnect structure formed of a material comprising ferritic stainless steel. The method comprises the following steps: (a) applying a coating of an austenite phase-stabilizer to the surface of the interconnect; and (b) heating the coated surface to diffuse the austenite phase-stabilizer into the surface, so that a surface region of the interconnect structure is transformed from a substantially ferritic body-centered cubic (BCC) phase to a substantially austenitic face-centered cubic (FCC) phase.

In another embodiment of this invention, a solid oxide fuel cell is disclosed. The fuel cell comprises: (i) a cathode; (ii) an anode; (iii) a ceramic electrolyte disposed between the anode and the cathode; (iv) a cathode interconnect attached to an upper surface of the cathode, having an interconnect surface which faces and at least partially contacts a surface of the cathode; and (v) an anode interconnect attached to a lower surface of the anode, having an interconnect surface which faces and at least partially contacts a surface of the anode; wherein at least one of the cathode interconnect surface or the anode interconnect surface comprises a surface region characterized by a substantially austenitic face-centered cubic (FCC) phase.

Yet another embodiment of this invention is directed to a solid oxide fuel cell stack. The stack is formed of a plurality of interconnected fuel cells. At least one of the fuel cells comprises a cathode interconnect formed of a ferritic stainless steel material and having a cathode interconnect surface facing the surface of a cathode of the fuel cell. The cathode interconnect surface includes a surface region characterized by a substantially austenitic face-centered cubic (FCC) phase.

Various aspects and embodiments of the present invention will now be described in connection with the accompanying drawings, in which:
FIG. 1 is a schematic representation of a solid oxide fuel cell.
FIG. 2 is a schematic cross-section of a portion of a fuel cell interconnect.
FIG. 3 is a depiction of the fuel cell interconnect of FIG. 2, to which an austenite phase-stabilizing material has been applied.
FIG. 4 is a depiction of the fuel cell interconnect of FIG. 3, after a prescribed heat treatment.

It should be noted that in the following description, like reference characters designate like or corresponding parts throughout the several views shown in the figures. It is also understood that terms such as "top," "bottom," "outward," "inward," "first," "second," and the like are words of convenience, and are not to be construed as limiting terms. Moreover, as used throughout this disclosure, the terms "a" and "an" do not denote a limitation of quantity, but rather denote the presence of at least one of the referenced items. The suffix "(s)" as used herein is intended to include both the singular and the plural of the term that it modifies, thereby including one or more of that term (e.g., the term "surface" may sometimes include one or more surfaces).

Fig 1 was mentioned above, and describes a typical structure for an SOFC, according to some embodiments of this invention. Cathode interconnect 22 is disposed over and attached to cathode 26. The inner surface 23 of the interconnect is formed from a pattern of fuel flow channels 25, and includes both the walls of the troughs, as well as the surface 27 of the "dividing walls", which will directly contact cathode 26.

As alluded to above, the alloy composition for cathode interconnect 22 is formed from a ferritic stainless steel alloy (sometimes referred to herein as "ferritic steel"). Such alloys are well-known in the art. Many of those which are used in electrochemical cells comprise about 60 to about 85 weight % iron and about 15 to about 30 weight % chromium. The alloys often contain carbon (e.g., up to about 0.1 weight %) and/or manganese (e.g., up to about 1 weight %). Various other metals may also be included, such as yttrium and lanthanum, which are typically present (in total) at a level of no more than about 1 weight %. However, it should be noted that the present invention is applicable to a wide variety of iron-chromium alloys which can be characterized as "ferritic stainless steel".

As mentioned above, a coating of an austenite-phase stabilizer is applied to the surface of the interconnect, i.e., to inner surface 23 and surface 27. The austenite-phase stabilizer comprises at least one metal selected from the group consisting of nickel, cobalt, nitrogen, carbon, and manganese. In some specific embodiments, the austenite-phase stabilizer comprises manganese, cobalt, or a combination of manganese and cobalt. However, nickel is preferred in many embodiments, while cobalt is the preferred stabilizer in other embodiments. The austenite phase-stabilizer usually must be deposited in metallic form. In some cases, though, the stabilizer can be deposited in oxide form, if it is subsequently reduced to metallic form, e.g., by a heat treatment in a reducing atmosphere, such as a hydrogen furnace.

A variety of deposition techniques could be employed to apply the austenite-phase stabilizer to the surface of the interconnect. Non-limiting examples include electroplating, electroless plating, vacuum plasma spraying, low pressure plasma spraying, vacuum arc spraying; physical vapor deposition, electron beam physical vapor deposition, sputter coating, and chemical vapor deposition. In some embodiments, electroplating is the preferred method of deposition; while in other embodiments, electroless plating would be the technique-of-choice. Those skilled in the art are familiar with these techniques, and can adapt each of them to a particular deposition situation. The amount of austenite coating material (i.e., the austenite-forming coating) which is to be applied to the interconnect surface will be determined in part by the desired depth of the austenitic surface layer or region, as discussed below. In general, the thickness of the austenite-forming coating is independent of the thickness of the substrate. Instead, the coating thickness is optimized to reduce or impede diffusion over the operating life of the fuel cell, as discussed herein.

After the austenite-phase stabilizer has been applied over the surface of the interconnect (cathode interconnect, anode interconnect, or both), a heat treatment is carried out to diffuse the material into the surface. The particular heating conditions will depend on a variety of factors, such as: the particular austenite-phase stabilizer metal employed; the manner in which the stabilizer metal was deposited; the specific composition of the underlying ferritic steel material, its microstructural characteristics; and the desired depth of the austenitic surface region. Various production factors can also be important, e.g., the amount of time required to form the desired surface region on an interconnect structure, in a typical fabrication facility.

Usually, the interconnect surface region is heated to a temperature which is at least about 40% of the melting point of the ferritic stainless steel material. In some specific embodiments, the surface region is heated to at least about 65% of the melting point of the ferritic steel material. As a non-limiting illustration in the case of a manganese or cobalt austenitic element, the diffusion temperature will be in the range of about 600°C to about 1100°C. In some specific embodiments, the diffusion temperature will be in the range of about 800°C to about 1000°C. Those skilled in the art understand that higher temperatures within these ranges may result in shorter heat-treatment duration, while longer heat treatments may compensate for lower diffusion temperatures. In some preferred embodiments for a commercial setting, the heat treatment time is usually in the range of about 1 hour to about 24 hours. (In the case of in-situ heat treatments, as discussed below, the heat treatment can actually be effected over the course of up to about 100 hours.) The heat treatment can be accomplished by a number of techniques. It is usually carried out in a conventional furnace, using an air or oxygen atmosphere. A reducing atmosphere (as mentioned above) or an inert atmosphere could alternatively be used.

In another embodiment of this invention, the heat treatment for the interconnect surface region can be carried out "in-situ", i.e., while the fuel cell is in operation. As one example, the austenite phase-stabilizing material could be applied to the interconnect, and then the interconnect could be incorporated into the fuel cell structure. As the fuel cell reaches its initial operating temperature (e.g., about 700°C-900°C), phase transformation of the surface region of the interconnect will usually begin to occur, as discussed below. Moreover, in some embodiments, the heat treatment can be carried out by a combination of initial, conventional heating and, then, in-situ heating. (As used herein, the term "heating the coated surface" is meant to also describe partial or total in-situ treatments).

As also mentioned previously, the heat treatment transforms the surface region of the interconnect structure from a substantially ferritic body-centered cubic (BCC) phase to a substantially austenitic face-centered cubic (FCC) phase, effectively forming a diffusion barrier layer. The average depth of the surface region will depend on a number of factors, some of which were mentioned above. They include: the particular austenitic stabilizer metal employed; and the specific composition of the underlying ferritic steel material.

In general, the surface region should be thick enough (i.e., its depth) to function as a barrier layer. The barrier layer impedes the diffusion of chromium out of the interconnect surface, and thereby reduces the oxidation rate of the base metal. However, the surface region should be thin enough to ensure that the bulk interconnect structure maintains a CTE value which is similar to or substantially identical to other structural members of the fuel cell, such as the ceramic electrolyte membrane.

In some embodiments, the surface region has a depth which is in the range of about 0.1 % to about 10% of the thickness of the interconnect structure. A non-limiting illustration can be provided, with reference to FIG. 1. For an interconnect having a thickness ("x") in the range of about 120 microns to about 1500 microns, the austenitic surface region would typically have a depth in the range of about 0.5 micron to about 10 microns. Those skilled in the art will be able to select the most appropriate depth for a surface region in a given situation, based on the teachings herein. Moreover, various imaging techniques which are known in the art can be used to determine the depth of the surface region which has changed in terms of its microstructural phase. One example is electron backscattered diffraction (EBSD) analysis.

The present disclosure also includes an inventive embodiment which is directed to a solid oxide fuel cell (SOFC), as described previously. With reference to FIG. 1, the exemplary planar fuel cell comprises a cathode interconnect 22 and a pair of electrodes, i.e., the cathode 26 and anode 24, separated by the electrolyte 28. In general, this cell arrangement is well-known in the art. However, the configuration depicted in the figure may be modified, e.g., with the anode layer above the electrolyte, and the cathode layer below the electrolyte. Those skilled in the art understand that fuel cells may operate horizontally, vertically, or in any orientation. In some cases, a bond layer may be situated between interconnect 22 and cathode 26. (Moreover, for ease-of-viewing, the thickness of the various layers in the figure is not necessarily to-scale; and the layers are shown in an exploded view).

With continued reference to FIG. 1, interconnect portion 22 defines a plurality of airflow channels 25 in contact with the cathode 26. As mentioned above, the austenite coating is applied to the surface of the interconnect. Interconnect portion 33 (attached to lower cathode 35) defines a plurality of fuel flow channels 34 in contact with the anode 24.

In some embodiments, it may also be desirable to apply an austenite coating to the surface of the anode interconnect which faces anode 24. Thus, the coating could be applied to the walls 45 (i.e., the troughs) of the fuel flow channels 34, as well as to the surface 47 of the dividing walls of the structures. The austenite-coated surface could then be heated as described previously (for diffusion and phase transformation), either as a separate step, or as part of another heat treatment for the fuel cell. The use of the austenitic material on the anode interconnect can also provide some of the key advantages noted herein for the cathode interconnect. In the case of the anode interconnect, the austenite-phase stabilizer is usually nickel.

In operating the fuel cell, a fuel flow 40 is supplied to the fuel flow channels 34. An airflow 38, typically heated air, is supplied to the airflow channels 25. The operation of a fuel cell like that depicted in FIG. 1 is known in the art. As a non-limiting example, U.S. Patent Application S.N. 11/565,236, filed on November 30, 2006 for T. Striker et al, describes the general concepts involved in the operation of a solid oxide fuel cell. U.S. Patent Application S.N. 11/863,747, filed on September 28 2007 for S.C. Quek et al; as well as U.S. Patents 6,949,307 (Cable et al) and 6,296,962 (Minh), are also instructive. All of these patents and patent applications are incorporated herein by reference. In general, a fuel, such as natural gas, is fed to an anode, where it undergoes an oxidation reaction. The fuel at the anode reacts with oxygen ions (O²⁻) transported to the anode across the electrolyte. The oxygen ions are reacted with hydrogen, forming water, and releasing electrons to an external electric circuit. As part of the fuel cell scheme, air is fed to the cathode. As the cathode accepts electrons from the external circuit, a reduction reaction occurs. The electrolyte conducts ions between the anode and the cathode. The electron flow produces direct current electricity, and the process produces heat and certain exhaust gases and liquids, e.g., water or carbon dioxide.

The compositions of the various structural layers of the SOFC are known in the art. The ceramic electrolyte is typically formed of a material capable of conducting ionic species (such as oxygen ions or hydrogen ions), yet having relatively low electronic conductivity. Examples of suitable ceramic materials include, but are not limited to, various forms of zirconia, ceria, hafnia, bismuth oxide, lanthanum gallate, thoria, and various combinations of these ceramics. In certain embodiments, the ceramic electrolyte comprises a material selected from the group consisting of yttria-stabilized zirconia, rare-earth-oxide-stabilized zirconia, scandia-stabilized zirconia, rare-earth doped ceria, alkaline-earth doped ceria, rare-earth oxide stabilized bismuth oxide, and various combinations of these compounds. In an exemplary embodiment, the ceramic electrolyte comprises yttria-stabilized zirconia. Doped zirconia is attractive because it exhibits substantially pure ionic conductivity over a wide range of oxygen partial pressure levels. In one embodiment, the ceramic electrolyte comprises a thermally sprayed yttria-stabilized zirconia. One skilled in the art would know how to choose an appropriate electrolyte, based on the requirements discussed herein.

Similarly, the composition of the anode layer may depend on the end use application. In one non-limiting embodiment, the anode layer comprises a material selected from the group consisting of a noble metal, a transition metal, a cermet, a ceramic, and combinations thereof. Some examples of suitable anode materials include, but are not limited to, nickel, a nickel alloy, cobalt, nickel-yttria stabilized zirconia cermet, copper-yttria stabilized zirconia cermet, nickel-ceria cermet, nickel-samaria doped ceria cermet, nickel-gadolinium doped ceria cermet, and combinations thereof. These anode materials may be doped with many different cations. For instance, for zirconia, Y, Ca, Sc may be used as dopants. In the case of ceria, Gd and Sm may be used as dopants. In a particular embodiment, the anode layer comprises nickel. Nickel provides the advantage of easy in-situ porosity formation, and is very robust in the green state. Other advantages of nickel relate to its relatively low cost and easy availability.

The cathode layer may also be formed from conventional materials, such as a variety of electrically-conductive (and in some cases ionically-conductive) compounds. Non-limiting examples include strontium doped LaMnO₃, strontium doped PrMnO₃, strontium doped lanthanum ferrites, strontium doped lanthanum cobaltites, strontium doped lanthanum cobaltite ferrites, strontium ferrite, SrFeCo_{0.5}Oₓ, SrCo_{0.8}Fe_{0.2}O_{3-δ}; La_{0.8}Sr_{0.2}Co_{0.8}Ni_{0.2}O_{3-δ}; La_{0.7}Sr_{0.3}Fe_{0.8}Ni_{0.2}O_{3-δ}; and combinations thereof. Composites of these materials may also be used. In certain embodiments, the ionic conductor comprises a material selected from the group consisting of yttria-stabilized zirconia, rare-earth-oxide-stabilized zirconia, scandia-stabilized zirconia, rare-earth doped ceria, alkaline-earth doped ceria, rare-earth oxide stabilized bismuth oxide, and various combinations of these compounds.

Various other details regarding materials for fuel cell components are known in the art. Moreover, methods for the manufacture of the cells are also known. Those skilled in the art are also familiar with techniques for the fabrication of fuel cell stacks. In the exemplary embodiment shown in FIG. 1, the fuel cell assembly 20 comprises a plurality of repeating units 30, usually having a planar configuration. Multiple cells of this type may be provided in a single structure. The structure may be referred to as a "stack", an "assembly", or a collection of cells capable of producing a single voltage output.

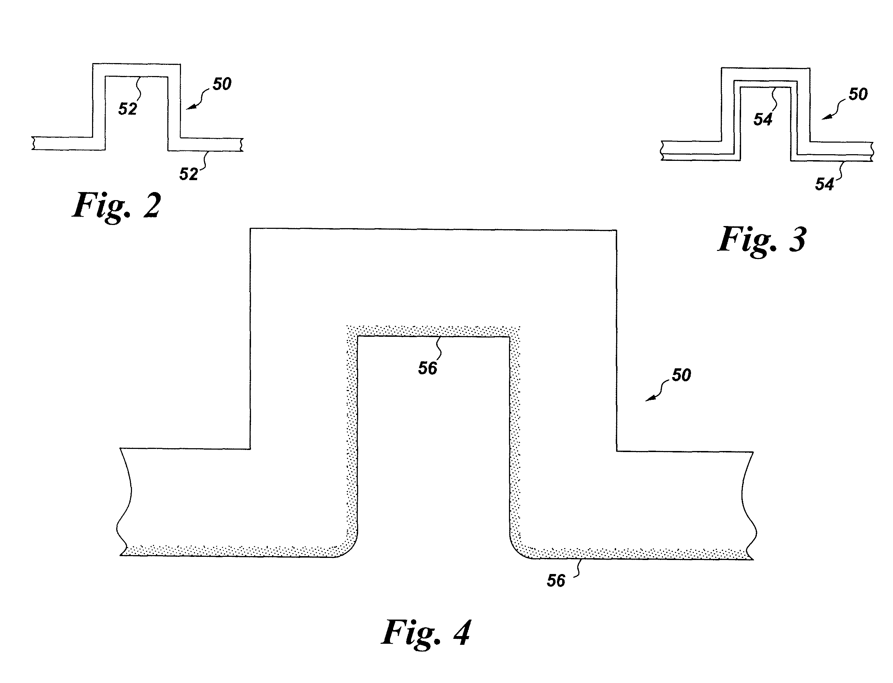

Fig 2 is a schematic cross-section of a portion 50 of a fuel cell interconnect, similar to that of cathode interconnect 22 (FIG. 1). The interconnect is formed of a ferritic steel material, and includes surface 52, which typically faces a cathode layer (not shown). In FIG. 3, an austenite material 54 (e.g., one comprising cobalt or manganese) is applied over surface 52, as described previously. The coated surface is then subjected to a heat treatment (or allowed to be partially or fully heat-treated, in-situ), so as to diffuse the austenite-phase stabilizer into the surface of the interconnect. As shown in FIG. 4, a surface region 56 is formed after the heat treatment. (The depth of the surface region is enlarged somewhat for ease-of-viewing. Moreover, the border of the region may actually be somewhat irregular, and may also follow the pattern of a diffusion profile). As noted above, the surface region is transformed into a substantially austenitic FCC phase. The presence of the FCC phase can result in the attendant advantages described herein, e.g., decreased chromium diffusion from the fuel cell interconnect, and a consequential increase in the useful service life of the cell. A residue of the austenite-phase stabilizer may sometimes remain on the surface of the interconnect after the heat-treatment. In some cases, the residue may be beneficial, and is allowed to remain. In other instances, it can be removed by a variety of cleaning techniques, such as chemical etching or mechanical grinding.

The patentable scope of the invention is defined by the claims. While this invention has been described in detail, with reference to specific embodiments, it will be apparent to those of ordinary skill in this area of technology that other modifications of this invention (beyond those specifically described herein) may be made, without departing from the spirit of the invention. Accordingly, the modifications contemplated by those skilled in the art should be considered to be within the scope of this invention. Furthermore, all of the patents, patent publications, articles, texts, and other references mentioned above are incorporated herein by reference.

Various aspects and embodiments of the present invention are now defined by the following numbered clauses:
1. A method for the formation of a diffusion barrier layer on a surface of at least one fuel cell interconnect structure formed of a material comprising ferritic steel, comprising the following steps:
   (a) applying a coating of an austenite-phase stabilizer to the surface of the interconnect; and
   (b) heating the coated surface to diffuse the austenite-phase stabilizer into the surface, so that a surface region of the interconnect structure is transformed from a substantially ferritic body-centered cubic (BCC) phase to a substantially austenitic face-centered cubic (FCC) phase, wherein the FCC phase exhibits the characteristic of reducing the diffusion rate of a metal atom, as compared to the diffusion rate of the metal atom through the BCC phase.
2. The method of clause 1, wherein the interconnect is attached to a cathode of the fuel cell.
3. The method of any preceding clause, wherein the interconnect structure material comprises chromium.
4. The method of any preceding clause, where the diffusion barrier layer has the characteristic of reducing the diffusion rate of chromium, as compared to the diffusion rate of chromium through a BCC ferritic material.
5. The method of any preceding clause, wherein the austenitic stabilizer comprises at least one metal selected from the group consisting of nickel, cobalt, nitrogen, carbon, and manganese.
6. The method of any preceding clause, wherein the austenite-phase stabilizer comprises manganese, cobalt, or a combination of manganese and cobalt.
7. The method of any preceding clause, wherein the austenite-phase stabilizer is cobalt.
8. The method of any preceding clause, wherein the coating of the austenite-phase stabilizer is applied to the surface by a technique selected from the group consisting of electroplating, electroless plating, vacuum plasma spraying, low-pressure plasma spraying, vacuum arc spraying, physical vapor deposition, electron beam physical vapor deposition, sputter coating, and chemical vapor deposition.
9. The method of any preceding clause, wherein the coated surface is heated in step (b), under conditions sufficient to form a surface region which has a depth of about 0.1% to about 10% of the thickness of the interconnect structure.
10. The method of any preceding clause, wherein the surface region has a depth of about 0.5 micron to about 10 microns.
11. The method of any preceding clause, wherein the surface region is heated to a temperature which is at least about 40% of the melting point of the ferritic steel material.
12. The method of any preceding clause, wherein at least a portion of the heating of the coated surface is carried out during operation of the fuel cell.
13. The method of any preceding clause, wherein the interconnect is attached to an anode of the fuel cell.
14. A solid oxide fuel cell, comprising:
   (i) a cathode;
   (ii) an anode;
   (iii) a ceramic electrolyte disposed between the anode and the cathode,
   (iv) a cathode interconnect attached to an upper surface of the cathode, having an interconnect surface which faces and at least partially contacts a surface of the cathode; and
   (v)an anode interconnect attached to a lower surface of the anode, having an interconnect surface which faces and at least partially contacts a surface of the anode;
   wherein at least one of the cathode interconnect surface or the anode interconnect surface comprises a surface region characterized by a substantially austenitic face-centered cubic (FCC) phase.
15. The solid oxide fuel cell of clause 14, wherein the cathode interconnect is formed of a material comprising ferritic stainless steel, and includes an underlying bulk region characterized by a substantially ferritic body-centered cubic (BCC) phase; and a surface region characterized by the substantially austenitic face-centered cubic (FCC) phase.
16. The solid oxide fuel cell of clause 14 or 15, wherein the average depth of the surface region is in the range of about 0.5 micron to about 10 microns.
17. The solid oxide fuel cell of any of clauses 14 to 16, wherein the ceramic electrolyte comprises a material selected from the group consisting of zirconia, ceria, hafnia, bismuth oxide, lanthanum gallate, thoria, and combinations thereof.
18. The solid oxide fuel cell of any of clauses 14 to 17 wherein the anode comprises a material selected from the group consisting of a noble metal, a transition metal, a cermet, a ceramic, and combinations thereof.
19. The solid oxide fuel cell of any of clauses 14 to 18, wherein the cathode comprises a material selected from the group consisting of strontium doped LaMnO₃, strontium doped PrMnO₃, strontium doped lanthanum ferrites, strontium doped lanthanum cobaltites, strontium doped lanthanum cobaltite ferrites, strontium ferrite, SrFeCo_{0.5}Oₓ, SrCo_{0.8}Fe_{0.2}O_{3-δ}; La_{0.8}Sr_{0.2}Co_{0.8}Ni_{0.2}O_{3-δ}; La_{0.7}Sr_{0.3}Fe_{0.8}Ni_{0.2}O_{3-δ} ; and combinations thereof.
20. The solid oxide fuel cell of any of clauses 14 to 19, wherein the cathode interconnect material comprises: about 60 weight % to about 85 weight % iron; about 0 weight % to about 0.1 weight % carbon; about 15 weight % to about 30 weight % chromium; about 0 weight % to about 1 weight % manganese; about 0 weight % to about 1 weight % yttrium; and about 0 weight % to about 1 weight % lanthanum.
21. The solid oxide fuel cell of any of clauses 14 to 20, wherein the coefficient-of-thermal-expansion (CTE) of the cathode interconnect is substantially identical to the CTE of the ceramic electrolyte membrane.
22. A solid oxide fuel cell stack formed of a plurality of interconnected fuel cells, wherein at least one of the fuel cells comprises a cathode interconnect formed of a ferritic stainless steel material and having a cathode interconnect surface facing the surface of a cathode of the fuel cell; wherein the cathode interconnect surface includes a surface region characterized by a substantially austenitic face-centered cubic (FCC) phase.

## Claims

1. A method for the formation of a diffusion barrier layer (56) on a surface (52) of at least one fuel cell interconnect structure (50) formed of a material comprising ferritic steel, comprising the following steps:
(a) applying a coating (54) of an austenite-phase stabilizer to the surface (52) of the interconnect (50); and
(b) heating the coated surface to diffuse the austenite-phase stabilizer into the surface (52), so that a surface region (56) of the interconnect structure (50) is transformed from a substantially ferritic body-centered cubic (BCC) phase to a substantially austenitic face-centered cubic (FCC) phase, wherein the FCC phase exhibits the characteristic of reducing the diffusion rate of a metal atom, as compared to the diffusion rate of the metal atom through the BCC phase.

2. The method of claim 1, wherein the interconnect (22) is attached to a cathode (26) of the fuel cell (20).

3. The method of any preceding claim, wherein the interconnect structure material comprises chromium.

4. The method of any preceding claim, where the diffusion barrier layer (56) has the characteristic of reducing the diffusion rate of chromium, as compared to the diffusion rate of chromium through a BCC ferritic material.

5. The method of any preceding claim, wherein the austenitic stabilizer comprises at least one metal selected from the group consisting of nickel, cobalt, nitrogen, carbon, and manganese.

6. The method of any preceding claim, wherein the coated surface (52) is heated in step (b), under conditions sufficient to form a surface region (56) which has a depth of about 0.1% to about 10% of the thickness of the interconnect structure (50).

7. The method of claim 6, wherein the surface region (56) has a depth of about 0.5 micron to about 10 microns.

8. A solid oxide fuel cell (20), comprising:
(i) a cathode (26);
(ii) an anode (24);
(iii) a ceramic electrolyte (28) disposed between the anode and the cathode,
(iv) a cathode interconnect (22) attached to an upper surface of the cathode (26), having an interconnect surface (23) which faces and at least partially contacts a surface of the cathode; and
(v)an anode interconnect (33) attached to a lower surface of the anode (24), having an interconnect surface which faces and at least partially contacts a surface of the anode;
wherein at least one of the cathode interconnect surface or the anode interconnect surface comprises a surface region **characterized by** a substantially austenitic face-centered cubic (FCC) phase.

9. The solid oxide fuel cell of claim 8, wherein the cathode interconnect (22) is formed of a material comprising ferritic stainless steel, and includes an underlying bulk region **characterized by** a substantially ferritic body-centered cubic (BCC) phase; and a surface region **characterized by** the substantially austenitic face-centered cubic (FCC) phase.

10. A solid oxide fuel cell stack formed of a plurality (30) of interconnected fuel cells, wherein at least one of the fuel cells comprises a cathode interconnect (22) formed of a ferritic stainless steel material and having a cathode interconnect surface facing the surface of a cathode (26) of the fuel cell (20); wherein the cathode interconnect surface includes a surface region **characterized by** a substantially austenitic face-centered cubic (FCC) phase.
